# FASCICULE DE BREVET EUROPEEN

(11) **EP 1 388 459 B1**
(45) Date de publication et mention de la délivrance du brevet: **30.11.2005**
(21) Numéro de dépôt: 03362012.1
(22) Date de dépôt: 25.07.2003
(51) Int. Cl.: B60P 1/28, B60P 1/58

(54) **Benne basculante à bec vibrant**
Kippmulde mit einer Vibrationsvorrichtung an dem hinteren Ende
Dump body with a vibrating rear end part

(30) Priorité: 09.08.2002 FR 0210158
(43) Date de publication de la demande: 11.02.2004
(73) Titulaire: Sthik, 17520 Saint-Ciers-Champagne (FR)
(72) Inventeur: Lefebure, Marc, 16100 Cognac (FR); Sthik, Yves-Gérard, 17520 Saint-Ciers-Champagne (FR)
(74) Mandataire: Thébault, Jean-Louis

(56) Documents cités:
- EP-A- 0 400 156
- US-A- 4 175 906

## Description

La présente invention a trait à une benne basculante à bec vibrant destinée plus particulièrement au transport de la vendange et son déchargement par exemple sur une table de tri ou dans un égrappoir au chai.

On connaît déjà diverses bennes basculantes pour ce transport. Parmi elles on peut citer les bennes à bec et les bennes à porte étanche qui n'endommagent pas la vendange, car elles ne comportent pas de moyens mécaniques de déplacement de la vendange dans la benne, mais le débit du déchargement est difficile, voire impossible à contrôler.

Afin de contrôler le débit on a proposé des bennes horizontales à vis, mais celles-ci ont tendance à triturer le raisin.

On a également proposé des bennes horizontales à fond vibrant mais le contrôle du débit est difficile et si le déchargement de la vendange n'est pas assez rapide, un compactage de la vendange peut se produire.

Enfin, une benne basculante à fond vibrant est montrée dans le document US 4 175 906.

L'invention s'applique plus précisément aux bennes basculantes montées ou non sur un châssis élévateur, à bec de déversement et équipées de systèmes vibratoires et vise à résoudre les inconvénients rappelés ci-dessus des dispositifs connus.

A cet effet, l'invention a pour objet une benne basculante à bec vibrant, du type comprenant, montée sur un châssis fixe ou élévateur, une benne levante (6) mue par un vérin porté par ledit châssis et munie d'un bec de déchargement, des moyens vibrants étant prévus pour faciliter le déchargement, caractérisée en que ledit bec est lié au corps de la benne par une liaison non-rigide absorbant les vibrations et en ce que lesdits moyens vibrants appliquent des vibrations au seul bec, le déchargement étant réalisé par la conjugaison de l'inclinaison dudit bec et de l'application des vibrations à ce dernier.

Selon un mode de réalisation préféré, le plancher du bec repose et est fixé par l'intermédiaire de blocs amortisseurs sur un châssis fixe solidaire du châssis de la benne et monté en prolongement de celui-ci, cependant que le plancher et les flancs du bec sont reliés respectivement au plancher et aux parois latérales de la benne par l'intermédiaire d'une liaison souple assurant la continuité de surface et les moyens vibrants sont fixés sous le plancher dudit bec, ledit châssis support de bec étant, de préférence, renforcé par deux bras latéraux solidaires, à une extrémité, de la benne et, à l'autre extrémité, d'une traverse disposée à l'avant du châssis de bec.

Un tel dispositif présente l'avantage substantiel de permettre un contrôle beaucoup plus précis du débit de vendange en cours de déchargement, du fait de l'inclinaison du plancher du bec vibrant et des vibrations communiquées directement au bec déverseur, et seulement à ce dernier, ce qui n'entraîne aucun compactage des raisins dans la benne, isolés des vibrations.

D'autres caractéristiques et avantages ressortiront de la description qui va suivre d'un mode de réalisation du dispositif de l'invention, description donnée à titre d'exemple uniquement et en regard des dessins annexés sur lesquels :
- Figure 1 est une vue générale en perspective plongeante d'une benne basculante conforme à l'invention ;
- Figure 2 est une vue en perspective plongeante de la benne de la figure 1, isolée de son châssis élévateur ;
- Figure 3 est une vue similaire à celle de la figure 2, le bec étant enlevé ;
- Figure 4 est une vue en élévation latérale du bec vibrant, et
- Figure 5 représente le bec équipé en variante d'un volet de canalisation de la vendange.

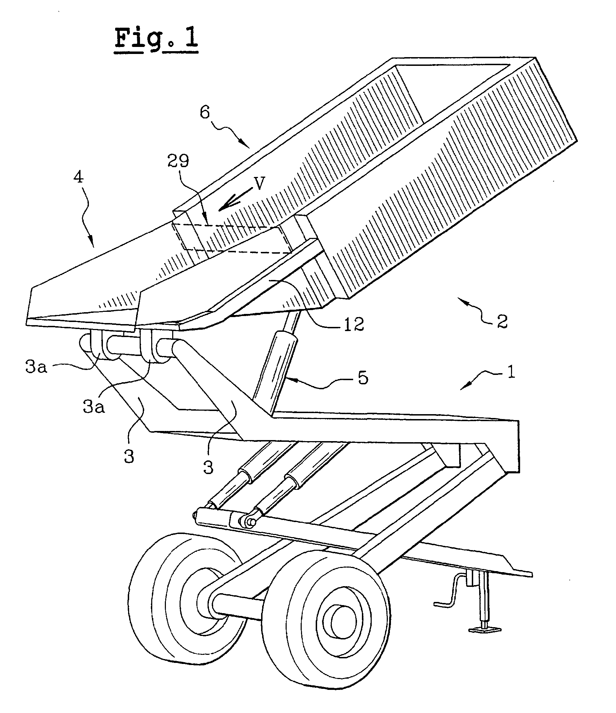

Sur la figure 1 on a représenté en 1 un châssis élévateur conventionnel sur roues, tracté, sur lequel est montée une benne à bec vibrant 2 selon l'invention.

Le châssis 1 supporte l'ensemble de la benne 2 par deux bras 3 à hauteur du bec 4, cependant que le levage de la benne par rapport au châssis est assuré, toujours à la manière conventionnelle, par un vérin 5 interposé entre le châssis 1 et l'extrémité du corps de benne, côté bec.

La morphologie générale de l'ensemble 2 est également conventionnelle, à savoir une benne proprement dite 6, de forme générale parallélépipédique prolongée à une extrémité par un bec 4 à plancher incliné par rapport à celui de la benne 6, la largeur du bec allant en se réduisant au fur et à mesure qu'on s'éloigne de la benne.

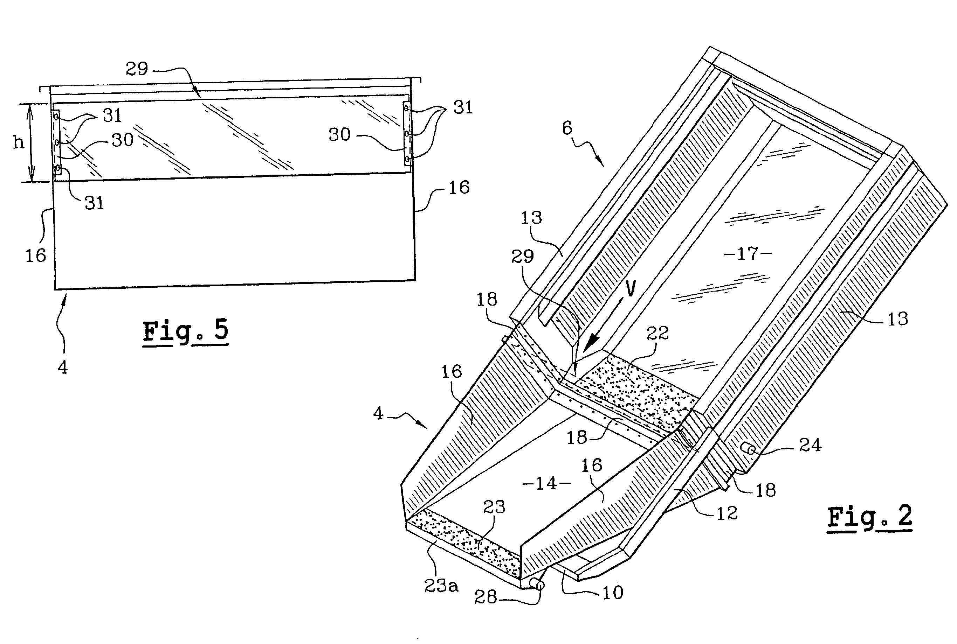

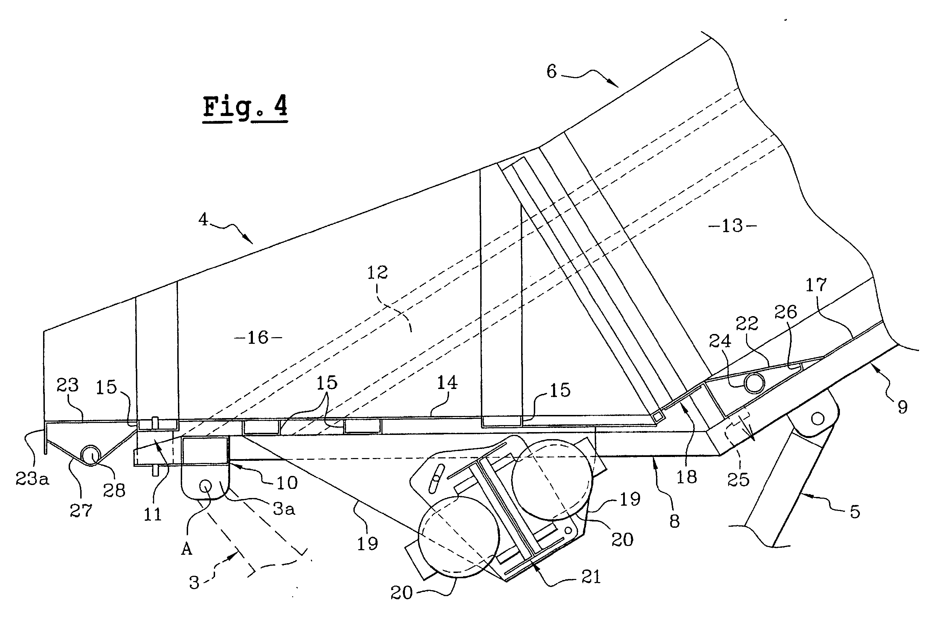

On va maintenant décrire plus en détail la benne à bec vibrant selon l'invention en se reportant aux figures 2 et 4.

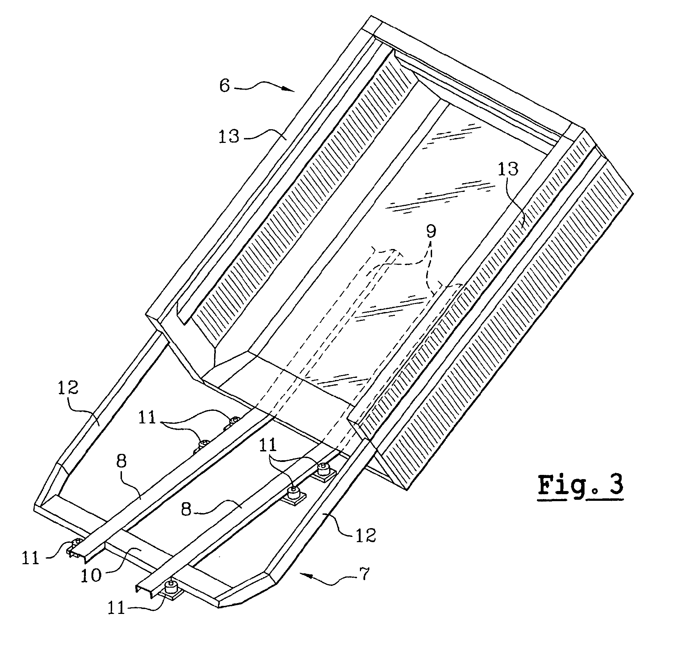

Conformément à l'invention, le bec 4, bien que porté par la benne 6, est relié à cette dernière par une liaison non-rigide absorbant les vibrations. A cet effet, le bec 4 repose sur un châssis porte-bec 7 représenté sur la figure 3, solidaire du châssis de la benne 6. Le châssis 7 comprend deux longerons 8 agencés dans le prolongement de deux longerons 9 du châssis de la benne 6.

A leurs extrémités les longerons 8 sont reliés à une traverse 10 proche de l'extrémité du bec 4 qui est fixé et repose sur le châssis 7 par l'intermédiaire de blocs amortisseurs 11 portés par les longerons 8 et la traverse 10.

En outre et de préférence, le châssis 7 est renforcé par deux bras latéraux 12 soutenant le bec 4, fixés, à une extrémité, sur les parois latérales 13 de la benne 6 et, à l'autre extrémité, aux extrémités de la traverse 10.

En 3a on a représenté l'une des chapes soudées sous la traverse 10 et sur lesquelles sont articulés les bras 3 du châssis 1 autour d'un axe A qui est l'axe de basculement de la benne.

Le bec 4 comprend un plancher 14 porté par une structure comportant des traverses 15 (figure 4) sur lesquelles sont fixés les blocs amortisseurs 11. Le plancher 14 est flanqué de parois latérales 16.

Le plancher 14 et les flancs 16 du bec 4 sont dans la continuité respectivement du plancher 17 de la benne 6 et des parois latérales 13, via des surfaces de liaison constituées par une membrane souple 18 par exemple en élastomère, en forme de bande de liaison entre le bec 4 et la benne 6.

Le système vibrant du bec 4 est disposé sous le plancher 14 et fixé entre deux flasques 19 eux-mêmes soudés aux longerons 8.

Entre les deux flasques parallèles 19 sont montés deux moteurs électriques à balourd 20 disposés de part et d'autre d'une paire de fers en U 21 montés tête-bêche entre les flasques. Par souci de clarté l'ensemble vibrant n'est pas représenté sur la figure 1 .

Suivant une autre caractéristique de la benne selon l'invention, il est prévu une première grille d'égouttage 22 à l'extrémité, côté bec 4, de la benne et une seconde grille d'égouttage 23 à l'extrémité du bec vibrant 4, pour la récolte des jus.

La grille 22 ferme un caisson transversal de collecte des jus de section triangulaire, fermé à chaque extrémité et muni, aux deux extrémités, d'un bouchon 24 de nettoyage, ainsi que d'un piquage 25, muni d'un robinet, pour l'évacuation des jus par connexion à un tuyau souple amovible. Les bouchons 24 sont disposés sensiblement à équidistance des parois latérales du caisson afin de permettre un nettoyage complet, cependant que les piquages 25 sont agencés près de l'arête inférieure du caisson pour permettre l'évacuation de tous les jus lorsque la benne 6 est levée.

Dans la zone la plus anguleuse du caisson de collecte une petite paroi soudée 26 ferme l'angle et permet ainsi un nettoyage efficace de l'intérieur du caisson via les bouchons 24 d'extrémité par l'intermédiaire desquels on peut introduire un tuyau d'eau de nettoyage.

Il est à noter que cette première grille d'égouttage 22 peut éventuellement être supprimée, le plancher 17 étant alors légèrement remonté sur son châssis pour former une surface plane jusqu'à l'extremité côté bec 4 de la benne 6.

La grille 23 ferme un caisson transversal de collecte des jus à fond en V 27.

Aux deux extrémités du caisson, dans le fond du V est agencé un piquage 28 muni d'un robinet pour l'évacuation des jus via un tuyau souple, ces piquages assurant également le nettoyage du caisson à l'aide d'un tuyau souple amovible.

Les parois du fond en V 27 sont soudées respectivement sur l'arête inférieure de la traverse 15 et sur un retour frontal 23 a de la grille 23, ce retour s'étendant vers le bras au-delà de la jonction avec ledit fond 27 afin d'éviter les phénomènes de capillarité sur la paroi externe du fond.

Tous les éléments constitutifs de la benne 6 et du bec 4, notamment ceux en contact avec la vendange, sont en acier inoxydable.

En position de déchargement illustrée par la figure 4, les jus de la benne 6 s'écoulent naturellement dans le caisson de la grille 22, cependant que les jus du bec 4 sont entraînés vers la grille 23, le déplacement de la vendange le long du bec 4 étant assuré par les vibrations communiquées au bec seul par les moteurs à balourd 20, conjuguées à l'effet de gravité plus ou moins accentué selon le degré d'inclinaison sur l'horizontale du plancher 14 en agissant sur le vérin 5. Ainsi, grâce à la conjugaison de l'inclinaison du plancher du bec 4 et des vibrations appliquées au bec 4, on peut régler et contrôler aisément et efficacement le débit du déchargement.

La benne 6 et son contenu ne sont soumis à aucune vibration ce qui évite tout compactage de la vendange dans la benne 6, source d'endommagement des raisins.

La figure 5 illustre une variante de réalisation dans laquelle le bec 4 est muni, à son extrémité amont, d'un volet 29 obturant partiellement l'ouverture d'entrée du bec dans sa partie supérieure.

Le volet 29 est représenté schématiquement en tiretés sur la figure 1, la figure 5 étant une vue suivant la flèche V des figures 1 et 2.

Le volet 29 est une plaque métallique rectangulaire disposée dans le plan de l'ouverture amont (côté benne 6) du bec 4 et fixée à ses extrémités sur deux pattes 30 elles-mêmes fixées sur les flancs 16 du bec, en partie haute de ces dernières.

Les pattes 30 comportent plusieurs trous 31 de fixation du volet 29, permettant de remplacer un volet d'une hauteur h par exemple d'une trentaine de centimètres par un autre volet par exemple de moindre hauteur mieux adaptée aux besoins.

Le rôle du volet 29 est de retenir et canaliser le flux de vendange déversé par la benne 6 en freinant la masse de la vendange évitant ainsi un afflux brutal et trop important de vendange dans le bec 4.

## Revendications

1. Benne basculante à bec vibrant, du type comprenant, montée sur un châssis (1) fixe ou élévateur, une benne levante (6) mue par un vérin (5) porté par ledit châssis et munie d'un bec de déchargement (4), des moyens vibrants (20) étant prévus pour faciliter le déchargement, **caractérisée en que** ledit bec (4) est lié au corps de la benne (6) par une liaison non-rigide absorbant les vibrations (11, 18) et en ce que lesdits moyens vibrants (20) appliquent des vibrations au seul bec (4), le déchargement étant réalisé par la conjugaison de l'inclinaison dudit bec et de l'application des vibrations à ce dernier.

2. Benne suivant la revendication 1, **caractérisée en ce que** le plancher (14) du bec (4) repose et est fixé par l'intermédiaire de blocs amortisseurs (11) sur un châssis fixe (8, 10) solidaire du châssis (9) de la benne (6) et monté en prolongement de celui-ci, cependant que le plancher (14) et les flancs (16) du bec (4) sont reliés respectivement au plancher (17) et aux parois latérales (13) de la benne (6) par l'intermédiaire d'une liaison souple assurant la continuité de surface et les moyens vibrants (20) sont fixés sous le plancher (14) dudit bec (4), ledit châssis (8, 10) support de bec étant, de préférence, renforcé par deux bras latéraux (12) solidaires, à une extrémité, de la benne (6) et, à l'autre extrémité, d'une traverse (10) disposée à l'avant du châssis de bec.

3. Benne suivant la revendication 2, **caractérisée en ce que** ladite liaison souple entre le bec (4) et la benne (6) est constituée d'une bande souple (18) en élastomère fixée, d'une part, au bec (4) et, d'autre part, à la benne (6).

4. Benne suivant l'une des revendications 1 à 3, **caractérisée en ce que** la benne (6) est munie à son extrémité, côté bec (4), d'un caisson de collecte des jus fermé par une grille (22) et pourvu de bouchons (24) de nettoyage et de piquages (25) d'évacuation des jus.

5. Benne suivant la revendication 4, **caractérisée en que** ledit caisson a une section rectangulaire dont l'angle le plus aigu est coupé par une paroi rapportée (26), lesdits bouchons (24) étant disposés sensiblement à équidistance des parois latérales du caisson.

6. Benne suivant l'une des revendications 1 à 4, **caractérisée en ce que** le bec (4) est muni à son extrémité d'un caisson de collecte des jus fermé par une grille (23) et pourvu de piquages (28) d'évacuation des jus et permettant également le nettoyage du caisson.

7. Benne suivant la revendication 6, **caractérisée en ce que** ledit caisson a une section à fond en V (27), lesdits piquages (28) étant disposés dans le fond du V, cependant que les parois du V sont soudées respectivement sur l'arête inférieure d'une traverse (15) support du plancher (14) du bec et sur un retour frontal (23 a) de ladite grille d'égouttage (23), ledit retour s'étendant vers le bas au-delà de la jonction avec ledit fond (27).

8. Benne suivant l'une des revendications 1 à 7, **caractérisé en ce que** le bec (4) est muni, à son extrémité côté benne (6), dans le plan de son ouverture d'entrée et en partie supérieure de cette dernière, d'un volet (29) de retenue/canalisation de la vendange.

9. Benne suivant la revendication 8, **caractérisé en ce que** ledit volet (29) est monté amovible et sa hauteur (h) est adaptée aux besoins.

## Patentansprüche

1. Kippmuldenvorrichtung mit vibrierendem Ausschüttabschnitt, des Typs, der eine an einem festen Rahmen (1) oder an einer Hubvorrichtung angebrachte hebbare Kippmulde (6) umfasst, die von einem von dem Rahmen getragenen Stellzylinder (5) bewegt und mit einem Entladungs-Ausschüttabschnitt (4) versehen ist, wobei Vibrationsmittel (20) vorgesehen sind, um das Entladen zu erleichtern, **dadurch gekennzeichnet, dass** der Ausschüttabschnitt (4) mit dem Körper der Kippmulde (6) über eine nicht starre Verbindung verbunden ist, die die Vibrationen (11, 18) absorbiert, und dass die Vibrationsmittel (20) Vibrationen nur auf den Ausschüttabschnitt (4) ausüben, wobei das Entladen durch Koordination der Neigung des Ausschüttabschnitts und der Ausübung der Vibrationen auf diesen letzteren bewerkstelligt wird.

2. Kippmuldenvorrichtung nach Anspruch 1, **dadurch gekennzeichnet, dass** der Boden (14) des Ausschüttabschnitts (4) auf dem festen Rahmen (8, 10), der mit dem Rahmen (9) der Kippmulde (6) fest verbunden ist und in dessen Verlängerung angebracht ist, aufliegt und über Dämpfungsblöcke (11) daran befestigt ist, wobei der Boden (14) und die Seitenwände (16) des Ausschüttabschnitts (4) mit dem Boden (17) bzw. mit den Seitenwänden (13) der Kippmulde (6) über eine elastische Verbindung verbunden sind, die die Kontinuität der Oberfläche gewährleistet, während die Vibrationsmittel (20) unter dem Boden (14) des Ausschüttabschnitts (4) befestigt sind, wobei der den Ausschüttabschnitt tragende Rahmen (8, 10) vorzugsweise durch zwei Seitenarme (12) verstärkt ist, die an einem Ende mit der Kippmulde (6) und am anderen Ende mit einer Querstrebe (10), die vor dem Rahmen des Ausschüttabschnitts angeordnet ist, verbunden sind.

3. Kippmuldenvorrichtung nach Anspruch 2, **dadurch gekennzeichnet, dass** die elastische Verbindung zwischen dem Ausschüttabschnitt (4) und der Kippmulde (6) durch ein elastisches elastomeres Band (16), das einerseits am Ausschüttabschnitt (4) und andererseits an der Kippmulde (6) befestigt ist, gebildet ist.

4. Kippmuldenvorrichtung nach einem der Ansprüche 1 bis 3, **dadurch gekennzeichnet, dass** die Kippmulde (6) an ihrem Ende auf Seiten des Ausschüttabschnitts (4) mit einem Saft-Sammelkasten versehen ist, der durch ein Gitter (22) verschlossen und mit Reinigungsstopfen (24) und Saftabsaugstutzen (25) versehen ist.

5. Kippmuldenvorrichtung nach Anspruch 4, **dadurch gekennzeichnet, dass** der Kasten einen rechtwinkligen Querschnitt hat, wovon der spitzeste Winkel durch eine angestückte Wand (26) abgeschnitten ist, wobei die Stopfen (24) im Wesentlichen im gleichen Abstand von den Seitenwänden des Kastens angeordnet sind.

6. Kippmuldenvorrichtung nach einem der Ansprüche 1 bis 4, **dadurch gekennzeichnet, dass** der Ausschüttabschnitt (4) an seinem Ende mit einem Saft-sammelkasten versehen ist, der durch ein Gitter (23) verschlossen und mit Saftabsaugstutzen (28) versehen ist, die außerdem die Reinigung des Kastens ermöglichen.

7. Kippmuldenvorrichtung nach Anspruch 6, **dadurch gekennzeichnet, dass** der Kasten einen Querschnitt mit V-förmigem Boden (27) hat, wobei die Absaugstutzen (28) in dem V-Boden angeordnet sind, während die Wände des V mit der Unterkante einer den Boden (14) des Ausschüttabschnitts tragenden Querstrebe (15) bzw. mit einem Stimrücksprung (23a) des Abtropfgitters (23) verschweißt sind, wobei sich der Rücksprung nach unten über die Verbindung mit dem Boden (27) hinaus erstreckt.

8. Kippmuldenvorrichtung nach einem der Ansprüche 1 bis 7, **dadurch gekennzeichnet, dass** der Ausschüttabschnitt (4) an seinem Ende auf Seiten der Kippmulde (6) in der Ebene seiner Einlassöffnung und zum Teil oberhalb dieser letzteren mit einer Klappe (29) zum Zurückhalten/Kanalisieren der geernteten Weintrauben versehen ist.

9. Kippmuldenvorrichtung nach Anspruch 8, **dadurch gekennzeichnet, dass** die Klappe (29) lösbar angebracht ist und dass ihre Höhe (h) an den Bedarf angepasst ist.

## Claims

1. A tilting skip with a vibrating chute, of the type comprising, mounted on a fixed or elevating chassis (1), a lifting skip (6) moved by a cylinder (5) carried by said chassis and provided with a discharge chute (4), vibrating means (20) being provided to facilitate discharge, **characterised in that** said chute (4) is connected to the body of the skip (6) by a non-rigid connection absorbing the vibrations (11, 18) and **in that** said vibrating means (20) apply vibrations solely to the chute (4), the discharge being effected by the combination of the inclination of said chute and the application of the vibrations to the latter.

2. A skip according to claim 1, **characterised in that** the floor (14) of the chute (4) rests on and is fixed by means of damper blocks (11) to a fixed chassis (8, 10) secured to the chassis (9) of the skip (6) and mounted as an extension to the latter, whereas the floor (14) and the sides (16) of the chute (4) are connected respectively to the floor (17) and to the lateral walls (13) of the skip (6) by means of a flexible connection providing continuity of surface, and the vibrating means (20) are fixed under the floor (14) of said chute (4), said chute support chassis (8, 10) preferably being reinforced by two lateral arms (12) secured at one end to the skip (6) and at the other end to a cross member (10) disposed in front of the chute chassis.

3. A skip according to claim 2, **characterised in that** said flexible connection between the chute (4) and the skip (6) is formed from a flexible strip (18) made from elastomer fixed on the one hand to the chute (4) and on the other hand to the skip (6).

4. A skip according to one of claims 1 to 3, **characterised in that** the skip (6) is provided at its end, on the chute (4) side, with a juice-collecting chamber closed off by a grille (22) and provided with cleaning plugs (24) and juice-discharge tappings (25).

5. A skip according to claim 4, **characterised in that** said chamber has a rectangular cross-section, the most acute angle of which is intersected by an attached wall (26), said plugs (24) being disposed substantially at equal distances from the lateral walls of the chamber.

6. A skip according to one of claims 1 to 4, **characterised in that** the chute (4) is provided at its end with a juice-collecting chamber closed off by a grille (23) and provided with juice-discharge tappings (28) and also allowing cleaning of the chamber.

7. A skip according to claim 6, **characterised in that** said chamber has a bottom section in a V (27), said tappings (28) being disposed in the bottom of the V, whereas the walls of the V are welded respectively to the bottom edge of a cross-member (15) supporting the floor (14) of the chute and to a front return (23a) of said drainage grille (23), said return extending downwards beyond the junction with said bottom (27).

8. A skip according to one of claims 1 to 7, **characterised in that** the chute (4) is provided, at its end on the skip side (6), in the same plane as its inlet opening and at the top of the latter, with a grape retaining/channelling flap (29).

9. A skip according to claim 8, **characterised in that** said flap (29) is mounted so as to be removable and its height (h) is adapted to requirements.
